# EUROPÄISCHE PATENTANMELDUNG

(11) **EP 4 512 564 A2**
(43) Veröffentlichungstag der Anmeldung: **26.02.2025**
(21) Anmeldenummer: 24186832.2
(22) Anmeldetag: 05.07.2024
(51) Int. Cl.: B23K 11/14, B23K 11/30

(54) **VERSCHLEISSELEKTRODE ZUM WIDERSTANDSBUCKELSCHWEISSEN VON BOLZEN**

(30) Priorität: 07.07.2023 DE 102023118089
(71) Anmelder: Doceram GmbH, 44309 Dortmund (DE)
(72) Erfinder: Stuba, Tobias Lars, 45663 Recklinghausen (DE); Flemmig, Daniel, 33647 Bielefeld (DE)
(74) Vertreter: Rätsch, Caroline

(57) **Zusammenfassung**

Die Erfindung betrifft eine Verschleißelektrode zum Widerstandsbuckelschweißen von Bolzen (9), mit einem Elektrodenkörper (5), der eine Öffnung (12) zum Einstecken eines Bolzens (9) aufweist und mit einer in dem Elektrodenkörper (5) ausgebildeten Aufnahme (24), in der eine Hülse (6) aufgenommen ist. Die Verschleißelektrode weist erfindungsgemäß ein Spannelement (7) auf, durch das die Hülse (6) gegen den Elektrodenkörper (5) vorgespannt werden kann. Hierdurch wird die Formhaltigkeit der Verschleißelektrode erhöht.

## Beschreibung

Die Erfindung betrifft eine Verschleißelektrode zum Widerstandsbuckelschweißen von Bolzen. Die Verschleißelektrode weist einen Elektrodenkörper mit einer Öffnung zum Einstecken eines Bolzens sowie eine in dem Elektrodenkörper ausgebildete Aufnahme auf, in der eine Hülse aufgenommen ist. Die Hülse dient zur Zentrierung des eingesteckten Bolzens.

Verfahren zum Widerstandsbuckelschweißen von Bolzen auf einem Werkstück - meist einem Blech - sind aus dem Stand der Technik gut bekannt. Dabei kommt eine Schweißelektrode mit einer Oberelektrode und einer Unterelektrode zum Einsatz. Die Unterelektrode weist eine Verschleißelektrode mit einem gattungsgemäßen Elektrodenkörper auf.

Vor dem Schweißvorgang wird das Blech auf der Verschleißelektrode platziert. Sodann wird der Bolzen durch eine Blechöffnung in die Öffnung des Elektrodenkörpers gesteckt. Die Blechöffnung definiert diejenige Position, an der der Bolzen an dem Blech verschweißt werden soll. Die Hülse dient dabei zur Zentrierung des Bolzens und weist gleichzeitig eine Isolierungsfunktion auf.

Zum Verschweißen fährt die Oberelektrode auf den Bolzen herunter und presst den Bolzen auf das Blech. Dabei wird eine elektrische Verbindung zwischen der Oberelektrode, dem Bolzen, dem Blech und der Unterelektrode hergestellt. Aufgrund des Spannungsabfalls zwischen dem Bolzen und dem Blech entsteht eine starke Wärmeentwicklung, die ein Aufschmelzen des Bolzens und damit ein Verschweißen des Bolzens mit dem Blech bewirkt.

Ein typischer Bolzen verfügt über einen Kopf und einen Stift. Der Kopf dient zur Auflage auf dem Blech. Er wird mit dem Blech verschweißt. Der Stift kann glatt ausgebildet sein oder über ein Außengewinde oder ein Innengewinde verfügen. Der Name "Buckelschweißen" leitet sich von einem oder mehreren Buckeln ab, die auf der Unterseite des Kopfes angeordnet sind, also derjenigen Seite, die dem Blech zugewandt sind. Aus dem Stand der Technik sind Bolzen mit mehreren einzelnen Buckeln bekannt, die auf der Unterseite des Kopfes angeordnet sind. Auch bekannt ist ein Buckelring. Der mindestens eine Buckel steht von der Unterseite des Bolzenkopfes ab und schmilzt bei dem Schweißvorgang auf.

Das Widerstandsschweißen hat sich insbesondere in der Automobilindustrie, aber auch in anderen Industriezweigen, grundsätzlich bewährt. Über mehrere Schweißzyklen kann es dazu kommen, dass Rückstände des während des Schweißvorgangs geschmolzenen Materials zu einer Abnutzung der Verschleißelektrode führen. Außerdem unterliegt die Verschleißelektrode einer besonderen Hitzebelastung durch die hohen Schweißtemperaturen und die Druckbelastung aufgrund des Anpressdrucks der Oberelektrode. Im Laufe der Zeit entsteht daher auf der Verschleißelektrode eine Vertiefung. Ist die Verschleißelektrode nicht mehr ausreichend formhaltig und/oder die Auflagefläche nicht mehr genügend elektrisch leitfähig, wird sie ausgewechselt. Aus Kosten- und Qualitätsgesichtspunkten ist eine möglichst lange Lebensdauer der Verschleißelektroden wünschenswert.

Eine gattungsgemäße Verschleißelektrode ist aus der EP 3 412 398 B1 bekannt. Die Verschleißelektrode weist einen Elektrodenkörper mit einer Öffnung auf, durch die hindurch der Bolzen steckt wird. In dem Elektrodenkörper ist eine Aufnahme zur Aufnahme einer zylindrischen Hülse ausgebildet. Die Hülse dient, wie zuvor beschrieben, zur Zentrierung des eingesteckten Bolzens.

Die bekannte Verschleißelektrode hat sich grundsätzlich bewährt. Allerdings unterliegt die bekannte Verschleißelektrode durch die Presskräfte der Oberelektrode und die Wärmeeinwirkung bei Schweißvorgang einer hohen Belastung. Dies führt zu Einbußen in der Formhaltigkeit.

Der Erfindung liegt die Aufgabe zugrunde, die Formhaltigkeit der Verschleißelektrode zu erhöhen.

Die Aufgabe wird gelöst durch eine Verschleißelektrode mit den Merkmalen des Anspruchs 1.

Die erfindungsgemäße Verschleißelektrode weist einen Elektrodenkörper mit einer Aufnahme auf, in der eine Hülse aufgenommen ist. Wie auch im Stand der Technik dient die Hülse zur Zentrierung eines Bolzens.

Erfindungsgemäß weist die Verschleißelektrode ein Spannelement auf, das in Gewindeeingriff mit dem Elektrodenkörper steht. Zweckmäßig hält das Spannelement die Hülse in der Aufnahme. Das Spannelement kann die Hülse gegen den Elektrodenkörper spannen. Die Hülse ist vorteilhaft zwischen dem Elektrodenkörper und dem Spannelement einspannbar aufgenommen. Hierdurch wird der Elektrodenkörper im Bereich des Werkstück abgestützt, was die Formhaltigkeit der Verschleißelektrode erhöht. Durch ein Anziehen des Spannelements wird die Vorspannung auf die Hülse erhöht. Vorzugsweise ist die Vorspannung also einstellbar.

Der Gewindeeingriff gestattet einerseits eine Einstellung der Vorspannung. Hierzu gehört auch, dass die Hülse nachgespannt werden kann. Andererseits ist das Gewinde in der Lage die Vorspannkräfte - und ggf. eine zusätzliche Krafteinwirkung beim Schweißvorgang - aufzunehmen.

Durch die Vorspannung der Hülse stützt die Hülse den Elektrodenkörper im Arbeitsbereich ab. Dies ist derjenige Bereich, in dem der Bolzen mit dem Werkstück, insbesondere einem Blech, verschweißt wird. Eine Erhöhung der Formhaltigkeit und damit der Lebensdauer ist die Folge.

Das erfindungsgemäße Spannelement hat noch den weiteren Vorteil. Die erfindungsgemäße Verschleißelektrode kann nämlich vormontiert zur Verfügung gestellt werden. Die Baugruppe besteht aus dem Elektrodenkörper, der Hülse und dem Spannelement. Dies ist insoweit besonders vorteilhaft, als Verschleißelektroden regelmäßig ausgetauscht werden müssen, wie es eingangs bereits geschildert worden ist. Hier kann erfindungsgemäß also eine fertige Baugruppe zur Verfügung gestellt werden. Bei der Lieferung der Verschleißelektrode braucht noch keine Vorspannung auf die Hülse aufgebracht zu sein. Das Spannelement hält die Hülse in der Aufnahme. Im Betrieb der Verschleißelektrode spannt das Spannelement die Hülse in Richtung der Öffnung gegen den Elektrodenkörper vor.

Vorzugsweise ist das Spannelement als Spannhülse mit einer Durchgangsöffnung ausgebildet. Zweckmäßig greift das Spannelement mit einem Außengewinde in ein Innengewinde des Elektrodenkörpers ein. Die Spannhülse weist zwei Vorteile auf. Zum einen kann sie zumindest teilweise den Bolzen aufnehmen. Dies ermöglicht eine kompakte Konstruktion. Insbesondere gestattet die Durchgangsöffnung den Einsatz von Druckluft, wie sie bei einigen Schweißelektroden zum Einsatz kommt. Druckluft dient bei bekannten Schweißverfahren dazu, Schweißspritzer von der Unterelektrode wegzublasen. Zum anderen kann man durch Drehen der Spannhülse die Hülse auf einfache Weise vorspannen. Je nach Anzugsmoment kann die Vorspannung gewählt werden.

Vorzugsweise ist das Gewinde ein Außengewinde. Die Konstruktion baut dann sehr kompakt.

Die Hülse weist einen ersten Abschnitt auf, in dem sich der Außendurchmesser der Hülse in Richtung der Öffnung verjüngt. Die Hülse verjüngt sich also in Richtung ihres freien Endes.

Dieser Weiterbildung liegt die Erkenntnis zugrunde, dass durch die Öffnung des Elektrodenkörpers Schlacke und Schweißspritzer gelangen können. Diese setzen sich an dem Gewinde fest. Hierdurch wird das Gewinde beeinträchtigt. Die metallischen Schweißspritzer können zu einem elektrischen Nebenschluss führen. Dies ist unerwünscht und führt zu Aufschmelzungen an unerwünschter Stelle.

Zur Abhilfe ist vorteilhaft vorgesehen, dass sich der Außendurchmesser der Hülse in Richtung der Öffnung verjüngt. Hierdurch kann sich die Hülse weiter in Richtung der Öffnung erstrecken als aus dem Stand der Technik bekannt. Gleichzeitig ist es vorteilhaft, wenn sich auch die Aufnahme verjüngt, so dass sie die Hülse im Bereich des ersten Abschnitts abstützt.

Dies hat mehrere Vorteile. Zum einen gestattet es die Verjüngung, dass die Hülse (bei einer vertikalen Schweißelektrode) weiter nach oben gezogen werden kann. Hierdurch kann das Gewinde mit dem Vorteil abgedeckt werden, dass es bei dem Schweißvorgang nicht mehr verschmutzt wird. Zum anderen werden unerwünschte elektrische Nebenschlüsse vermieden.

Die vorteilhafte Ausführungsform hat einen wesentlichen weiteren Vorteil. Die Verjüngung ermöglicht es, dass der Elektrodenkörper (in einer seitlichen Schnittansicht) zwar im Bereich des ersten Abschnitts zur Öffnung hin dünner wird. Allerdings stützt die Hülse den Elektrodenkörper im Bereich der Verjüngung ab. Trotz der dünneren Wandstärke des Elektrodenkörpers im Bereich der Verjüngung liegt erfindungsgemäß also dennoch eine hervorragende Stabilität vor.

Durch die Abstützung wird die Formhaltigkeit bzw. die Lebensdauer erhöht. Die Verschleißelektrode muss weniger häufig ausgetauscht werden. Im Übrigen ermöglicht die Verjüngung einen vorteilhaften Stromfluss zwischen der Verschleißelektrode und dem mindestens einen Buckel des Bolzens. Dies hängt damit zusammen, dass sich ausreichend Elektrodenkörper-Material unterhalb des Bolzenkopfes befindet.

Vorzugsweise weist die Hülse eine Durchgangsöffnung auf. Durch diese kann der Stift hindurchgreifen. Zweckmäßig fluchtet die Durchgangsöffnung der Hülse mit der Öffnung des Elektrodenkörpers.

Die Verjüngung kann grundsätzlich stufig erfolgen. Beispielsweise weist die Verjüngung mindestens eine Stufe auf.

Als besonders vorteilhaft wird es jedoch angesehen, wenn sich die Hülse im ersten Abschnitt konisch verjüngt. Die konische Form gestattet im besonderen Maße eine keramikgerechte Fertigung einer keramischen Hülse, wie sie als vorteilhaft angesehen wird. Neben guten Isolationseigenschaften hat der keramische Werkstoff auch den Vorteil einer guten Abriebfestigkeit, was sich insbesondere vorteilhaft bei scharfen Gewindegängen eines Bolzen-Stifts auswirkt.

Außerdem gestattet die konische Verjüngung einen besonders vorteilhaften Kraftfluss, was sich positiv auf die Lebensdauer auswirkt.

Die konische Verjüngung gestattet aber auch einen optimalen Stromfluss. Dieser erfolgt nämlich vorteilhaft auf möglichst kurzem Weg von der Verschleißelektrode durch das Werkstück in den Bolzen (oder umgekehrt). Der Stromfluss muss also keinen "Umweg" nehmen.

Vorzugsweise erstreckt sich der Elektrodenkörper in einer seitlichen Schnittansicht über den ersten Abschnitt. Die Aufnahme des Elektrodenkörpers, in der die Hülse sitzt, verjüngt sich also zur Öffnung hin. Damit bietet der Elektrodenkörper vorteilhaft einerseits eine große Auflagefläche für das Werkstück. Andererseits stützt er die aufgenommene Hülse ab. Umgekehrt stützt auch die Hülse den Elektrodenkörper in diesem Bereich ab, wie es vorstehend bereits als vorteilhaft beschrieben worden ist.

Eine vorteilhafte Ausführungsform der Erfindung ist dadurch gekennzeichnet, dass sich die Hülse bis in die Öffnung hineinerstreckt. Dann ist die Hülse in der Öffnung vorteilhaft zwischen dem Elektrodenkörper und einem in die Verschleißelektrode eingesteckten Bolzen angeordnet. Diese Ausführungsform hat den Vorteil, dass das Gewinde eines eingesteckten Bolzens weitestgehend geschützt ist. Elektrische Nebenschlüsse und/oder Verschmutzungen des Gewindes werden wirksam vermieden. Im Stand der Technik war es teilweise so, dass sich die Öffnung über die Lebensdauer zunehmend verengt hat. Dies hängt mit dem hohen Druck zusammen, den die Oberelektrode auf den Bolzen und das Werkstück und damit auch auf die Unterelektrode ausübt. Das Material des Elektrodenkörpers wurde also im Bereich der Öffnung zunehmend verdrängt, und zwar so, dass einerseits eine (unerwünschte) Vertiefung und anderseits eine (ebenfalls unerwünschte) Verkleinerung der Öffnung erfolgte. Zudem wurde teilweise das Bauteil, welches an dieser Stelle plan auf der Auflagefläche liegen sollte, während des Schweißens in die Senke gedrückt. Das Resultat führte zu einem sogenannten "Eintellern" des Bauteils, welches zu einem Ausschluss des Bauteils führen konnte. Dadurch, dass sich die Hülse bis in die Öffnung hineinerstreckt, kann dieser Nachteil vermieden werden. Eine erhöhte Formhaltigkeit ist die Folge.

In Weiterbildung der Erfindung wird vorgeschlagen, dass der Elektrodenkörper eine plane Auflagefläche zur Auflage eines Werkstücks aufweist, das mit dem Bolzen verschweißt werden soll, wobei die Auflagefläche eine Auflageebene bildet, und wobei der Abstand zwischen der Hülse und der Auflageebene weniger als 2 mm, vorzugsweise weniger als 1 mm beträgt. Insbesondere kann vorgesehen sein, dass die Hülse im Wesentlichen in der durch die Auflagefläche definierten Auflageebene endet. Dabei bedeutet "im Wesentlichen", dass vorteilhafterweise die Hülse theoretisch genau bis in die Auflageebene ragen kann. Aufgrund von Toleranzabweichungen wird man in der Praxis die Hülse jedoch nur knapp bis an die Auflageebene heranreichen lassen, um zu vermeiden, dass das Werkstück ausschließlich auf der Hülse aufliegt. Hierdurch kann sichergestellt werden, dass sowohl der Schaft des Bolzens als auch der Elektrodenkörper der Verschleißelektrode abgedeckt sind.

Bereits vorstehend wurde angesprochen, dass die Hülse nicht nur eine Abschirmfunktion für den Bolzen-Stift aufweist, sondern auch eine Stützfunktion für den Elektrodenkörper. Insoweit wird es als vorteilhaft angesehen, wenn der Elektrodenkörper im Bereich des ersten Abschnitts flächig an der Hülse anliegt.

Durch die flächige Anlage kann die Hülse eine maximale Stützfunktion gewährleisten. Die gilt vor allem auch dann, wenn die Aufnahme eine sich verjüngende, insbesondere konische, Anlagefläche aufweist, an der die Hülse anliegt, wie es für sich genommen als vorteilhaft betrachtet wird.

Ebenfalls in Hinblick auf eine gute Abstützung des Elektrodenkörpers im Bereich der Auflage durch die Hülse wird es als günstig angesehen, wenn die Hülse mit Vorspannung an der Anlagefläche anliegt. Hierdurch kann sie dem Druck der Oberelektrode vorteilhaft entgegenwirken.

Eine vorteilhafte Ausführungsform der Erfindung ist dadurch gekennzeichnet, dass die Aufnahme einen zylindrischen Aufnahmeabschnitt aufweist, in dem die Hülse längsverschieblich geführt ist. Hierdurch kann die Hülse besonders gut in die Aufnahme gesteckt werden. Bei einem zusätzlichen Verspannen, wie es nachfolgend noch näher beschrieben wird, gleitet die Hülse in dem zylindrischen Aufnahmeabschnitt ab, bis sie zur Anlage an der vorbezeichneten Anlagefläche anliegt.

Alternativ oder zusätzlich ist es vorteilhaft, dass die Hülse einen zylindrischen Führungsabschnitt aufweist, mit dem die Hülse in dem Elektrodenkörper, insbesondere in der Aufnahme, längsverschieblich geführt ist. Durch einen zylindrischen Führungsabschnitt erhält die Hülse eine einfache und gleichzeitig sehr stabile Form, die sie unempfindlich für ihren Einsatz macht.

Vorteilhafterweise ist die Hülse in Richtung auf die Öffnung vorgespannt. Die Hülse ist also im Betrieb der Schweißelektrode eingespannt. Die Vorspannung gewährleistet, dass der Elektrodenkörper erhebliche Kräfte der Oberelektrode aufnehmen kann.

Eine vorteilhafte Ausführungsform der erfindungsgemäßen Verschleißelektrode ist dadurch gekennzeichnet, dass die Hülse einen zweiten Abschnitt aufweist, in dem sich der Außendurchmesser der Hülse von der Öffnung weg verjüngt. Während sich die Hülse im ersten Abschnitt zu ihrem ersten freien Ende hin verjüngt, verjüngt sich die Hülse im zweiten Abschnitt vorteilhaft zu ihrem zweiten freien Ende hin, was für sich genommen als vorteilhaft angesehen wird. Hierdurch verteilt sich die Kraft auf den Elektrodenkörper besonders vorteilhaft. Dies gilt insbesondere dann, wenn sich der zweite Abschnitt konisch verjüngt. Die konische Form ist auch bei einem keramischen Material vorteilhaft, da eine keramische Hülse besonders gut in der Lage ist, Druckkräfte aufzunehmen.

Die Hülse weist vorzugsweise also einen ersten und einen zweiten Abschnitt auf, die sich jeweils in entgegengesetzte Richtung nach außen, insbesondere konisch, verjüngen. Dies gestattet besonders vorteilhaft, bei einem Verschleiß des ersten Abschnitts die Hülse auszubauen und seitenverkehrt zu verwenden, damit der zweite - nicht verschlissene - Abschnitt die eingangs beschriebene Stützfunktion übernehmen kann.

Im Übrigen wird die Austauschbarkeit erfindungsgemäß auch dadurch ermöglich, dass das Spannelement lösbar, vorzugsweise formschlüssig, mit dem Elektrodenkörper verbunden ist, wie es für sich genommen und unabhängig von anderen Merkmalen als vorteilhaft angesehen wird.

Aus Stabilitätsgründen wird es auch als vorteilhaft angesehen, wenn das Spannelement eine Stützfläche aufweist, mit der das Spannelement der Hülse, insbesondere an dem zweiten Abschnitt der Hülse, anliegt. Sofern der zweite Abschnitt der Hülse konisch ausgebildet ist, ist eine konische Stützfläche vorteilhaft.

Der Schutz der vorliegenden Erfindung beschränkt sich nicht auf eine Verschleißelektrode. Vom Schutzumfang umfasst sein soll auch eine Unterelektrode mit einer erfindungsgemäßen Verschleißelektrode sowie eine Schweißvorrichtung mit einer Oberelektrode und einer Unterelektrode, die eine erfindungsgemäße Verschleißelektrode aufweist.

Im Folgenden wird die Erfindung anhand von bevorzugten Ausführungsbeispielen im Zusammenhang mit der anhängenden Zeichnung näher erläutert. Die Zeichnung zeigt in:
- Figur 1: eine auseinandergezogene Darstellung eines Bauteils mit einer erfindungsgemäßen Verschleißelektrode;
- Figur 2: das Bauteil nach Figur 1 in einer Schnittansicht;
- Figur 3: eine vergrößerte Ansicht eines Details aus Figur 2;
- Figur 4: eine Schnittansicht eines Elektrodenkörpers der Verschleißelektrode nach Figur 1;
- Figur 5: ein zweites Ausführungsbeispiel eines Bauteils mit einer erfindungsgemäßen Verschleißelektrode in einer auseinandergezogenen Darstellung;
- Figur 6: das Bauteil nach Figur 5 in einer Schnittansicht;
- Figur 7: eine erfindungsgemäße Schweißvorrichtung mit einem dritten Ausführungsbeispiel einer Verschleißelektrode; und
- Figur 8: die Verschleißelektrode nach Figur 5 als vergrößertes Detail.

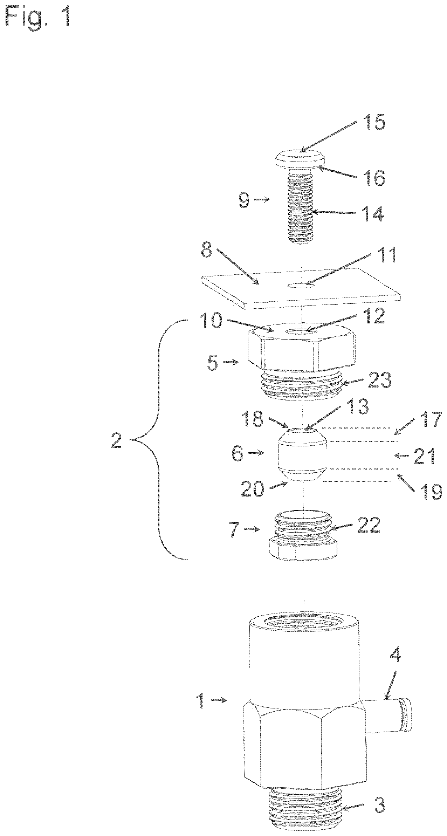

Figur 1 zeigt ein Bauteil für eine Schweißvorrichtung. Das Bauteil weist eine Basis 1 und eine Verschleißelektrode 2 auf. Die Basis 1 ist auf eine (nicht gezeigte) Schweißvorrichtung schraubbar und weist hierzu ein Gewinde 3 auf. Mit dem Bezugszeichen 4 ist ein pneumatischer Anschluss gekennzeichnet.

Die Verschleißelektrode 2 weist drei Komponenten auf, nämlich einen Elektrodenkörper 5, eine Hülse 6 und ein Spannelement 7. Vorzugsweise ist die äußere Querschnittsform der Hülse 6 rund. Insbesondere kann die Hülse 6 rotationssymmetrisch ausgebildet sein.

Vorteilhafterweise spannt das Spannelement 7 die Hülse 6 in dem Elektrodenkörper 5 ein.

Mit der Schweißvorrichtung können ein Blech 8 und ein Bolzen 9 miteinander verschweißt werden. Das Blech 8 wird vor dem Schweißvorgang auf die Verschleißelektrode 2 gelegt. Hierzu weist der Elektrodenkörper 5 eine Auflagefläche 10 auf, die vorliegend plan ausgebildet ist.

Vor dem Schweißvorgang wird der Bolzen 9 in eine Öffnung 11 des Blechs 8 und weiter in eine Öffnung 12 des Elektrodenkörpers 5 gesteckt. Die Hülse 6 weist eine Durchgangsöffnung 13 auf, in die ein Gewindestift 14 des eingesetzten Bolzens 9 eingreift. Beim Schweißvorgang wird der Bolzen 9 durch eine (nicht dargestellte) Oberelektrode in Richtung auf das Blech gedrückt, bis der Bolzen 9 mit seinem Kopf 15 auf dem Blech aufliegt. Auf der Unterseite des Kopfes 15 geht ein Buckel 16 ab, der vorliegend als Ringbuckel ausgebildet ist und beim Kontakt mit dem Blech 8 aufschmilzt und mit diesem verschweißt.

Das Prinzip des Widerstandsbuckelschweißens von Bolzen auf Blechen ist grundsätzlich bekannt. Es braucht hier nicht näher erläutert zu werden.

Wie es ferner aus Figur 1 hervorgeht, weist die Hülse 6 einen ersten Abschnitt 17 auf, in dem sich der Außendurchmesser der Hülse 6 zu einem freien Ende 18 verjüngt. Vorliegend verjüngt sich die Hülse 6 konisch, was als besonders vorteilhaft angesehen wird. Die Hülse 6 weist einen zweiten Abschnitt 19 auf, in dem sich die Hülse 6 ebenfalls vorzugsweise konisch verjüngt. Die Verjüngung erfolgt zu dem anderen freien Ende 20 der Hülse 6 hin. Zwischen dem ersten Abschnitt 17 und dem zweiten Abschnitt 19 weist die Hülse einen zylindrischen Führungsabschnitt 21 auf.

Die Hülse 6 wird zur Montage in den Elektrodenkörper 5 gesteckt. Das Spannelement 7 weist ein Gewinde 22 auf, mittels dessen das Spannelement 7 in den Elektrodenkörper 5 geschraubt werden kann. Das Spannelement 7 kann die Hülse 6 vorspannen, wie es nachfolgend noch näher erläutert wird.

Der Elektrodenkörper 5 weist ebenfalls ein Gewinde 23 auf. Er kann in die Basis 1 eingeschraubt werden.

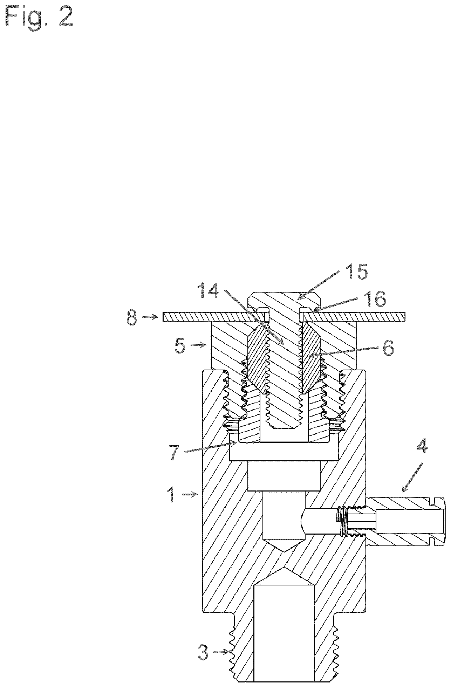

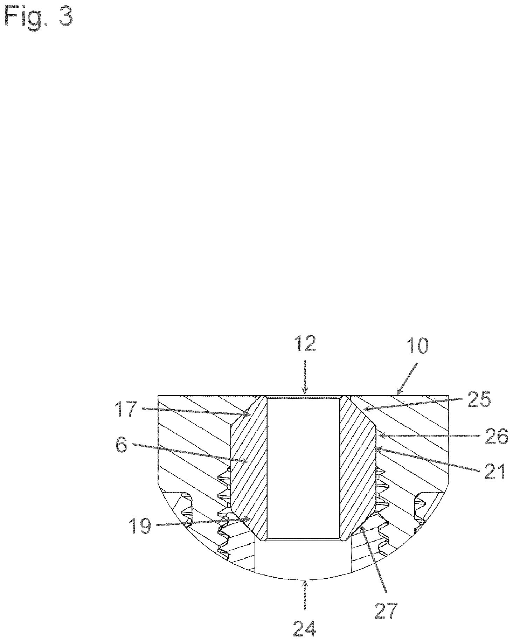

Es wird im Folgenden auf die Figuren 2 und 3 Bezug genommen, die das Bauteil, insbesondere auch die Verschleißelektrode 2, in einer Schnittansicht im zusammengesetzten Zustand zeigen. In Figur 3 sind aus Übersichtsgründen der Bolzen 9 und das Blech 8 weggelassen.

Die Hülse 6 sitzt in einer Aufnahme 24. Vorzugsweise verjüngt sich die Aufnahme 24 in einem Abschnitt 25 zur Öffnung 12 hin, was für sich genommen als vorteilhaft angesehen wird, und zwar insbesondere dann, wenn sich die Aufnahme 24 konisch verjüngt.

Der Abschnitt 25 bildet eine vorzugsweise konische Anlagefläche für die Hülse 6. In dem Abschnitt 25 liegt der erste Abschnitt 17 der Hülse 6 an. Hierdurch kann die Hülse 6 den Elektrodenkörper 5 in dem Abschnitt 25 bei einer Druckbelastung auf die Auflagefläche 10 abstützen. Trotz der in Richtung der Öffnung 12 dünner werdenden Wandstärke im Abschnitt 25 ermöglicht die Hülse 6 also eine Stabilisierung dieses Bereichs. Dies gilt insbesondere dann, wenn die Hülse 6 mit Vorspannung in der Aufnahme 24 sitzt. Hierzu ist das Spannelement 7 in den Elektrodenkörper 5 eingeschraubt und liegt mit Vorspannung an der Hülse 6 an.

Vorzugsweise weist die Aufnahme 24 ein Innengewinde auf, in dem das Spannelement 7 eingeschraubt ist.

Mit dem Bezugszeichen 26 ist ein zylindrischer Aufnahmeabschnitt gekennzeichnet, in dem die Hülse 6 längsverschieblich geführt ist. Bei einem Einschrauben des Spannelements 7 in den Elektrodenkörper 5 wandert die Hülse 6 in Richtung der Öffnung 12, bis sie an dem Abschnitt 25 anliegt. Der Abschnitt 25 dient also vorteilhaft als Anschlag für die Hülse 6. Das Spannelement 7 weist eine vorzugsweise konische Stützfläche 27 auf, mit der es an dem zweiten Abschnitt 19 der Hülse 6 anliegt.

Vorzugsweise erstreckt sich die Hülse 6 bis in die Öffnung 12 hinein. Die Öffnung 12 wird vorteilhaft durch den sich nicht verjüngenden Bereich des Elektrodenkörpers 5 gebildet. Sie kann beispielsweise gebohrt sein. Dann ist die Öffnung 12 zylindrisch. Dadurch, dass die Hülse 6 sich so weit nach oben erstreckt, kann das Gewinde eines eingesteckten Bolzens (siehe Figur 2) abgedeckt werden, so dass keine Gefahr einer Beschädigung durch Schweißspritzer oder sonstiger Verschmutzung besteht. Gleichzeitig erstreckt sich der Elektrodenkörper 5 bis unter den Buckel 16 (siehe Figur 2), so dass ein vorteilhafter Stromfluss gewährleistet ist.

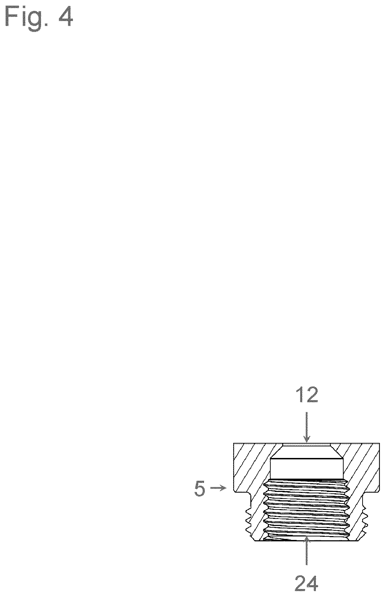

Figur 4 zeigt einen Elektrodenkörper 5 in Alleinstellung. Hieraus sind die Aufnahme 24 und die Öffnung 12 noch einmal besser ersichtlich. In der Öffnung 12 verjüngt sich der Elektrodenkörper 5 vorteilhaft nicht.

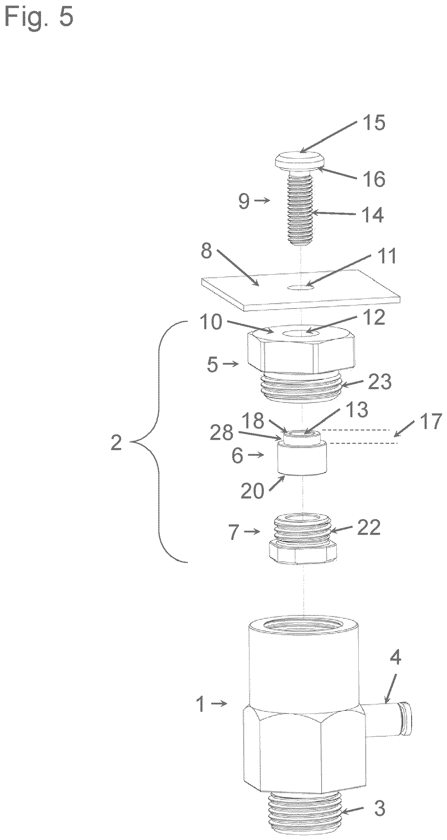

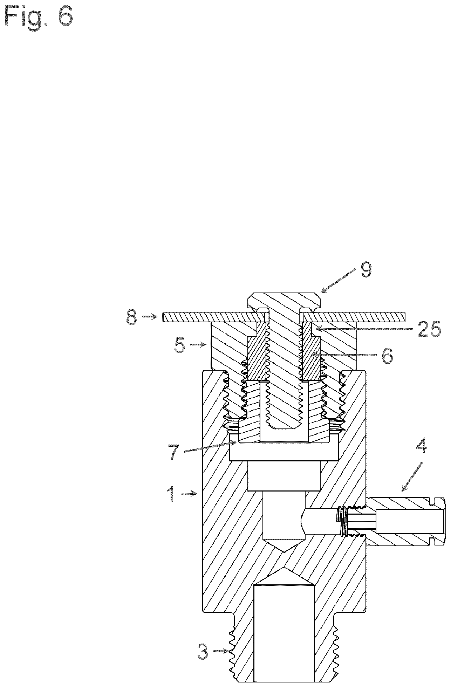

Die Figur 5 und 6 zeigen ein zweites Ausführungsbeispiel, dass sich von dem ersten Ausführungsbeispiel dadurch unterscheidet, dass der erste Abschnitt 17 der Hülse 6 zur Bildung der Verjüngung Stufen 28 aufweist. Wie es sich aus Figur 6 ergibt, ist dann auch der Abschnitt 25 stufig ausgebildet. Ferner soll bei diesem Ausführungsbeispiel exemplarisch gezeigt werden, dass der zweite Abschnitt 19 des ersten Ausführungsbeispiels auch weggelassen werden kann. Dann weist die Hülse 6 ein Ende 20 mit einem zylindrischen Abschluss auf. Das Spannelement 7 ist entsprechend angepasst. Im Übrigen wird auf die Beschreibung des ersten Ausführungsbeispiels verwiesen.

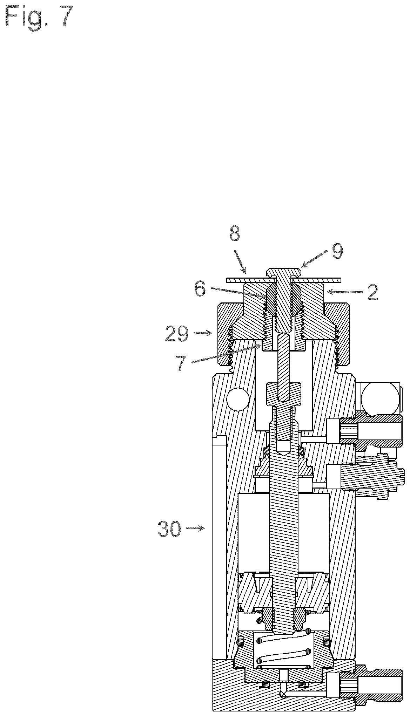

Figur 7 zeigt ein drittes Ausführungsbeispiel der Erfindung. Hier ist die Verschleißelektrode 2 mittels einer Überwurfmutter 29 auf einer Unterelektrode 30 montiert. Die Konstruktion und Funktionsweise der Unterelektrode 30 ist (mit Ausnahme der Verschleißelektrode 2) im Grundsatz Stand der Technik und braucht nicht weiter erläutert zu werden.

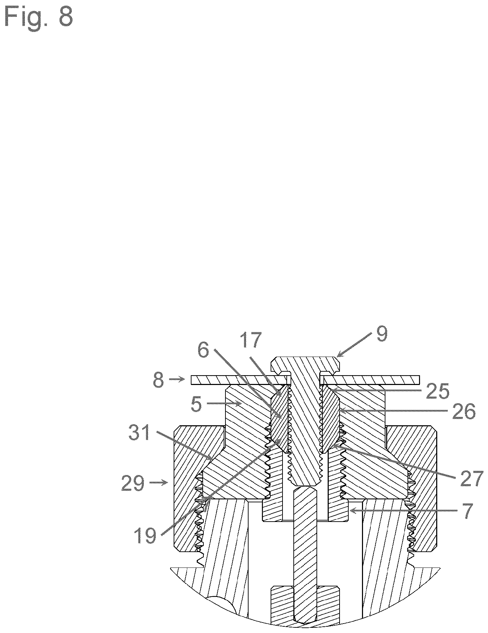

Figur 8 zeigt eine vergrößerte Darstellung eines Details aus Figur 7. Hieraus wird deutlich, dass im Gegensatz zu dem ersten Ausführungsbeispiel der Elektrodenkörper 5 kein Außengewinde aufweist, sondern schräge Stützflächen 31, die von der Überwurfmutter 29 übergriffen werden, um den Elektrodenkörper 5 auf der Unterelektrode 30 zu sichern. Im Übrigen wird auf die Beschreibung des ersten Ausführungsbeispiels verwiesen.

Aus Übersichtsgründen wurden in der vorstehenden Beschreibung für unterschiedliche Ausführungsbeispiele teilweise dieselben Bezugszeichen verwendet, auch wenn die entsprechenden Bauteile eine geringfügig andere Konstruktion aufweisen.

### Bezugszeichenliste

- 1: Basis
- 2: Verschleißelektrode
- 3: Gewinde
- 4: Pneumatischer Anschluss
- 5: Elektrodenkörper
- 6: Hülse
- 7: Spannelement
- 8: Blech
- 9: Bolzen
- 10: Auflagefläche
- 11: Öffnung (Blech)
- 12: Öffnung (Elektrodenkörper)
- 13: Durchgangsöffnung
- 14: Gewindestift
- 15: Kopf
- 16: Buckel
- 17: erster Abschnitt
- 18: Ende
- 19: zweiter Abschnitt
- 20: Ende
- 21: Führungsabschnitt
- 22: Gewinde
- 23: Gewinde
- 24: Aufnahme
- 25: Abschnitt (Elektrodenkörper)
- 26: Aufnahmeabschnitt (Elektrodenkörper)
- 27: Stützfläche (Spannelement)
- 28: Stufen
- 29: Überwurfmutter
- 30: Unterelektrode
- 31: Stützfläche

## Patentansprüche

1. Verschleißelektrode zum Widerstandsbuckelschweißen von Bolzen (9), mit
- einem Elektrodenkörper (5), der eine Öffnung (12) zum Einstecken eines Bolzens (9) aufweist,
- einer in dem Elektrodenkörper (5) ausgebildeten Aufnahme (24),
- wobei in der Aufnahme (24) eine Hülse (6) aufgenommen ist,
**dadurch gekennzeichnet,**
- **dass** die Verschleißelektrode ein Spannelement (7) aufweist, das mit dem Elektrodenkörper (5) in Gewindeeingriff steht, so dass es die Hülse (6) gegen den Elektrodenkörper (5) spannen kann.

2. Verschleißelektrode nach Anspruch 1, **dadurch gekennzeichnet, dass** das Spannelement (7) als Spannhülse mit einer Durchgangsöffnung (13) ausgebildet ist.

3. Verschleißelektrode nach Anspruch 1 oder 2, **dadurch gekennzeichnet, dass** das Spannelement (7) mit einem Gewinde (22) in ein Innengewinde des Elektrodenkörpers (5) eingreift.

4. Verschleißelektrode nach einem der Ansprüche 1 bis 3, **dadurch gekennzeichnet, dass** die Hülse (6) einen ersten Abschnitt (17) aufweist, in dem sich der Außendurchmesser der Hülse (6) in Richtung der Öffnung (12) vorzugsweise konisch verjüngt.

5. Verschleißelektrode nach einem der Ansprüche 1 bis 4, **dadurch gekennzeichnet, dass** sich der Elektrodenkörper (5) über den ersten Abschnitt (17) erstreckt.

6. Verschleißelektrode nach einem der Ansprüche 1 bis 5, **dadurch gekennzeichnet, dass** sich die Hülse (6) bis in die Öffnung (12) hineinerstreckt.

7. Verschleißelektrode nach einem der Ansprüche 1 bis 6, **dadurch gekennzeichnet, dass** der Elektrodenkörper (5) eine plane Auflagefläche (10) zur Auflage eines Werkstücks aufweist, das mit dem Bolzen (9) verschweißt werden soll, wobei die Auflagefläche (10) eine Auflageebene bildet, und wobei der Abstand zwischen der Hülse (6) und der Auflageebene weniger als 2 mm, vorzugsweise weniger als 1 mm, beträgt.

8. Verschleißelektrode nach Anspruch 7, **dadurch gekennzeichnet, dass** die Hülse (6) im Wesentlichen in der durch die Auflagefläche (10) definierten Auflageebene endet.

9. Verschleißelektrode nach einem der Ansprüche 1 bis 8, **dadurch gekennzeichnet, dass** der Elektrodenkörper (5) im Bereich des ersten Abschnitts (17) flächig an der Hülse (6) anliegt.

10. Verschleißelektrode nach einem der Ansprüche 1 bis 9, **dadurch gekennzeichnet, dass** der Elektrodenkörper (5) eine vorzugsweise konische Anlagefläche aufweist, an der die Hülse (6) anliegt.

11. Verschleißelektrode nach Anspruch 10, **dadurch gekennzeichnet, dass** die Hülse (6) mit Vorspannung an der Anlagefläche anliegt.

12. Verschleißelektrode nach einem der Ansprüche 1 bis 11, **dadurch gekennzeichnet, dass** die Aufnahme (24) einen zylindrischen Aufnahmeabschnitt (26) aufweist, in dem die Hülse (6) längsverschieblich geführt ist und/oder dass die Hülse (6) einen zylindrischen Führungsabschnitt (21) aufweist, mit dem die Hülse (6) in dem Elektrodenkörper (5) längsverschieblich geführt ist.

13. Verschleißelektrode nach einem der Ansprüche 1 bis 12, **dadurch gekennzeichnet, dass** die Hülse (6) einen zweiten Abschnitt (19) aufweist, wobei sich vorzugsweise dessen Außendurchmesser von der Öffnung (12) weg verjüngt.

14. Verschleißelektrode nach Anspruch 13, **dadurch gekennzeichnet, dass** sich der zweite Abschnitt (19) konisch verjüngt.

15. Verschleißelektrode nach Anspruch 13 oder 14, **dadurch gekennzeichnet, dass** das Spannelement (7) eine vorzugsweise konische Stützfläche (27) aufweist, mit dem das Spannelement (7) an dem zweiten Abschnitt (19) der Hülse (6) anliegt.

16. Verschleißelektrode nach einem der Ansprüche 1 bis 15, **dadurch gekennzeichnet, dass** die Hülse (6) aus einem elektrisch isolierenden Material, insbesondere aus Keramik besteht.

17. Verschleißelektrode nach einem der Ansprüche 1 bis 16, **dadurch gekennzeichnet, dass** der Elektrodenkörper (5) ein Gewinde (23) zum Einschrauben in eine Basis (1) aufweist.

18. Unterelektrode mit einer Verschleißelektrode nach einem der Ansprüche 1 bis 17.
